# FASCICULE DE BREVET EUROPEEN

(11) **EP 4 183 662 B1**
(45) Date de publication et mention de la délivrance du brevet: **03.07.2024**
(21) Numéro de dépôt: 22209180.3
(22) Date de dépôt: 23.11.2022
(51) Int. Cl.: B62B 3/00, B62B 5/04

(54) **DISPOSITIF DE FREINAGE POUR UN CHARIOT POUR COLIS**
BREMSVORRICHTUNG FÜR EINEN PAKETWAGEN
BRAKING DEVICE FOR A PARCEL WAGON

(30) Priorité: 23.11.2021 FR 2112404
(43) Date de publication de la demande: 24.05.2023
(73) Titulaire: APF ENTREPRISE 21, 21600 Longvic (FR)
(72) Inventeur: BONNEFOY, Romain, 21000 DIJON (FR); IBANEZ, Stéphane, 21000 DIJON (FR); KORDJANI, Bachir, 60100 CREIL (FR)
(74) Mandataire: Oudin, Stéphane

(56) Documents cités:
- CH-A- 307 151
- US-A- 3 231 050
- US-A- 4 555 827
- US-A1- 2008 088 103

## Description

### Domaine technique de l'invention

La présente invention se rapporte au domaine général des chariots en treillis pour colis utilisés notamment pour la préparation de commandes des clients dans des entrepôts de stockage de marchandises. Elle vise plus précisément un dispositif de freinage pour lesdits chariots en treillis pour colis.

### Etat de la technique

Dans le domaine de la préparation de commandes de clients dans des entrepôts de stockage de marchandises, il est connu d'utiliser des chariots pour charger et déplacer les colis commandés par des clients depuis leur lieu de stockage jusqu'au lieu d'expédition. Ces chariots comprennent généralement un plateau de forme globalement rectangulaire reposant sur une pluralité de roulettes et muni d'au moins trois panneaux en treillis disposés verticalement le long d'au moins un des bords longitudinaux et des deux bords latéraux dudit plateau.

Ces chariots pour colis comportent également un dispositif de freinage pour les immobiliser en cas de besoin. De tels dispositifs de freinage connus sont décrits dans la demande de brevet suisse CH 307 151 ou dans la demande de brevet américain US 3 231 050.

De manière classique, le dispositif de freinage de ce type de chariot comprend :
- un patin disposé à l'une des extrémités d'une lame ressort, cette dernière étant fixée par son autre extrémité sous le plateau dudit chariot et tendant à ramener le patin dans une position "haute" dans laquelle ce dernier n'est pas en contact avec le sol, ledit patin étant apte à être déplacé verticalement jusqu'à une position "basse" dans laquelle ce dernier est en contact avec le sol de sorte à immobiliser ledit chariot,
- une came fixée à l'une des extrémités d'un arbre monté pivotant sous le plateau du chariot autour d'un axe horizontal, ladite came permettant de déplacer l'extrémité libre de la lame ressort vers le bas en direction du sol de sorte à amener le patin jusqu'à sa position "basse" ou au contraire de libérer l'extrémité libre de la lame ressort de sorte à ramener le patin jusqu'à sa position "haute" grâce à l'action de la lame ressort, et
- une pédale disposée à l'extérieur et en partie basse du chariot et fixée à l'autre extrémité dudit arbre, la pédale permettant de mettre en mouvement de rotation la came.

Ce dispositif de freinage est certes efficace mais présente tout de même un certain nombre d'inconvénients dus à la manipulation de la pédale. En effet, la pédale, qui est prévue par être actionnée par un opérateur à l'aide de son pied, doit être de dimensions suffisamment importantes, ce qui, d'une part, augmente de manière significative les dimensions hors-tout du chariot et donc l'espace au sol nécessaire au stockage de ce dernier et, d'autre part, rend la manipulation dudit chariot plus délicate. Par ailleurs, pour faire pivoter la pédale, l'opérateur doit exercer une pression importante sur cette dernière, ce qui peut lui causer des blessures physiques.

### Résumé de l'invention

Le but de la présente invention est donc de proposer un dispositif de freinage pour chariots en treillis pour colis, ledit dispositif étant facile à manipuler sans risque de blessure pour l'opérateur sans augmenter les dimensions hors-tout du chariot et donc l'espace au sol nécessaire au stockage de ce dernier.

Conformément à l'invention, il est donc proposé un dispositif de freinage pour un chariot roulant pour colis comprenant un plateau de forme globalement carrée ou rectangulaire reposant sur une pluralité de roulettes et muni d'au moins un panneau vertical en treillis disposé le long d'un des bords dudit plateau, ledit dispositif de freinage comportant au moins :
- un patin disposé sous le plateau dudit chariot et étant mobile entre une position "haute" dans laquelle il n'est pas en contact avec le sol et une position "basse" dans laquelle il est en appui contre le sol de sorte à pouvoir freiner et immobiliser ledit chariot, et inversement,
- des moyens de déplacement pour déplacer ledit patin entre sa position "haute" et sa position "basse", et inversement,
- un arbre s'étendant sous le plateau du chariot et monté pivotant autour d'un axe de rotation horizontal et perpendiculaire audit bord dudit plateau, ledit arbre coopérant avec les moyens de déplacement pour déplacer ledit patin, et
- une biellette fixée à une extrémité de l'arbre et à l'extérieur du chariot du côté du panneau vertical, et s'étendant perpendiculairement à l'axe de rotation dudit arbre, ledit dispositif de freinage étant remarquable en ce qu'il comporte un bras de manoeuvre monté pivotant sur le panneau vertical à l'extérieur du chariot autour d'un axe de rotation parallèle à l'axe de rotation de l'arbre, ledit bras de manoeuvre coopérant avec la biellette de sorte qu'une rotation du bras de manoeuvre autour de son axe de rotation dans un sens entraine, grâce à ladite biellette, une rotation de l'arbre autour de son axe de rotation dans l'autre sens, et inversement.

On comprend bien le dispositif de freinage selon l'invention permet un freinage efficace du chariot roulant pour colis associé grâce à la manipulation aisée, avec une main, de son bras de manoeuvre, sans risque de blessure pour l'opérateur sans augmenter les dimensions hors-tout du chariot et donc l'espace au sol nécessaire au stockage de ce dernier.

Selon un mode de réalisation avantageux, la biellette comporte un pion s'étendant parallèlement audit axe de rotation de l'arbre, ledit pion se déplaçant à l'intérieur d'une rainure aménagée sur l'une des extrémités du bras de manoeuvre.

Ladite rainure est de préférence de forme oblongue et traverse de part en part ledit bras de manoeuvre.

Les bras de manoeuvre et biellette sont avantageusement réalisés à partir de plats métalliques.

De manière avantageuse, les moyens de déplacement comprennent au moins :
- une lame associée à un ressort de traction recevant à l'une de ses extrémités le patin et étant montée pivotante autour d'un axe horizontal par son autre extrémité sous le plateau dudit chariot, ladite lame tendant à ramener ledit patin dans sa position "haute", et
- une came disposée sous ledit plateau et fixée sur l'arbre, ladite came permettant de déplacer l'extrémité libre de la lame ressort vers le bas en direction du sol de sorte à amener le patin jusqu'à sa position "basse" ou, au contraire, de libérer l'extrémité libre de la lame ressort de sorte à ramener le patin jusqu'à sa position "haute" grâce à l'action dudit ressort.

Le dispositif de freinage comporte en outre une plaque de protection fixée contre le panneau vertical à l'extérieur du chariot au droit de la zone de déplacement de l'extrémité libre du bras de manoeuvre.

### Brève description des figures

D'autres avantages et caractéristiques ressortiront mieux de la description qui va suivre d'un mode d'exécution de l'invention en référence aux figures annexées sur lesquelles :
[Fig 1] est une vue en perspective d'un dispositif de freinage selon l'invention monté sur un chariot pour colis,
[Fig 2] est une vue de détail agrandie du dispositif de freinage de la figure 1,
[Fig 3] est une vue de côté du dispositif de la figure 1,

### Description des modes de réalisation

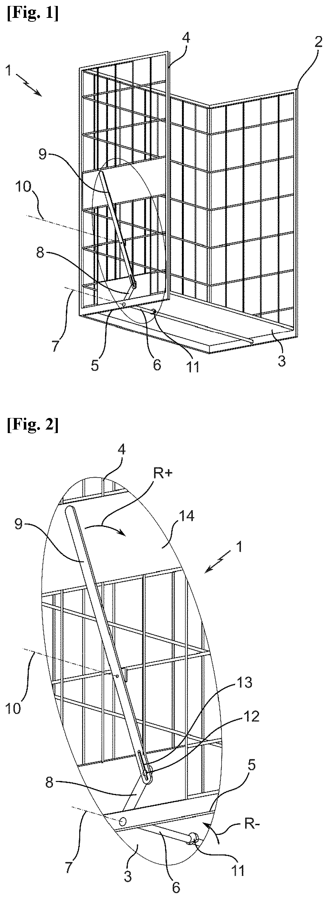

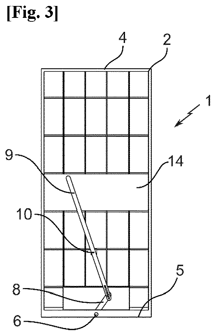

Sur les figures 1 à 3, on a représenté un dispositif de freinage 1 selon l'invention pour un chariot 2 roulant pour colis, ledit chariot 2 comprenant un plateau 3 classiquement de forme globalement carrée ou rectangulaire reposant sur une pluralité de roulettes non représentées et muni d'au moins un panneau vertical 4 en treillis disposé le long d'un 5 des bords dudit plateau 3.

Ledit dispositif de freinage 1 comprend au moins :
- un patin non représenté disposé sous le plateau 3 dudit chariot 2 et étant mobile entre une position "haute" dans laquelle il n'est pas en contact avec le sol et une position "basse" dans laquelle il est en appui contre le sol de sorte à pouvoir freiner et immobiliser ledit chariot 2, et inversement,
- des moyens de déplacement pour déplacer ledit patin entre sa position "haute" et sa position "basse", et inversement,
- un arbre 6 s'étendant sous le plateau 3 du chariot 2 et monté pivotant autour d'un axe de rotation 7 horizontal et perpendiculaire audit bord 5 dudit plateau 3, ledit arbre 6 coopérant avec les moyens de déplacement pour déplacer ledit patin,
- une biellette 8 fixée à l'autre extrémité dudit arbre 6 et à l'extérieur du chariot 2 du côté du panneau vertical 4, et s'étendant perpendiculairement à l'axe de rotation 7 de ce dernier, et
- un bras de manoeuvre 9 monté pivotant sur le panneau vertical 4 à l'extérieur du chariot 2 autour d'un axe de rotation 10 parallèle à l'axe de rotation 7 de l'arbre 6, ledit bras de manoeuvre 9 coopérant avec la biellette 8 de sorte qu'une rotation du bras de manoeuvre 9 autour de son axe de rotation 10 dans un sens entraine, grâce à ladite biellette 8, une rotation de l'arbre 6 autour de son axe de rotation 7 dans l'autre sens, et inversement.

Lesdits moyens de déplacement partiellement représentés comprennent avantageusement au moins :
- une lame associée à un ressort de traction et recevant à l'une de ses extrémités le patin et étant montée pivotante autour d'un axe horizontal par son autre extrémité sous le plateau 3 dudit chariot 2, ledit ressort tendant à ramener ledit patin dans sa position "haute", et
- une came 11 disposée sous ledit plateau 3 et fixée sur l'arbre 6, ladite came 11 permettant de transformer le mouvement de rotation dudit arbre 6 en un mouvement de translation de l'extrémité libre de la lame de sorte à déplacer ladite extrémité libre vers le bas en direction du sol afin d'amener le patin jusqu'à sa position "basse" ou, au contraire, de libérer l'extrémité libre de la lame afin de ramener le patin jusqu'à sa position "haute" grâce à l'action dudit ressort.

On comprend bien que les moyens de déplacement pourront d'un tout autre type tel que, par exemple, une lame ressort ou encore un ensemble pignon - crémaillère, sans sortir de la présente invention.

Pour obtenir la coopération entre le bras de manoeuvre 9 et la biellette 8 telle que décrite précédemment, la biellette 8 comporte un pion 12 s'étendant parallèlement audit axe de rotation 7 de l'arbre 6, avantageusement en direction opposée audit panneau vertical 4, ledit pion 12 se déplaçant à l'intérieur d'une rainure 13 aménagée sur l'une des extrémités du bras de manoeuvre 9. De manière avantageuse, ladite rainure 13 est de forme oblongue et traverse de part en part ledit bras de manoeuvre 9. Cette configuration est intéressante car elle est de conception simple et permet de ne pas augmenter les dimensions hors-tout du chariot 2.

Ainsi avec la configuration du dispositif de freinage 1 selon l'invention précédemment décrite, pour immobiliser le chariot 2, un opérateur appuie avec sa main sur l'extrémité libre du bras de manoeuvre 9 afin de le faire pivoter autour de son axe de rotation 10, par exemple, dans un sens R+ représenté sur la figure 2. La rainure 13 entraîne le pion 12 de la biellette 8 qui se déplace à l'intérieur de ladite rainure 13 et fait pivoter l'arbre 6 autour de son axe de rotation 7 dans un sens R- opposé au sens R+. La rotation de l'arbre 6 a pour effet de faire pour passer ledit patin de sa position "haute" à sa position "basse" afin d'immobiliser ledit chariot 2, grâce, dans l'exemple de réalisation décrit, à la rotation de la came 11 qui entraine l'extrémité libre de la lame vers le bas en direction du sol.

Pour libérer le chariot 2, il suffit à l'opérateur d'appuyer avec sa main sur l'extrémité libre du bras de manoeuvre 9 afin de le faire pivoter dans le sens opposé à R+.

On comprend bien que pour faciliter sa manipulation, mais également du fait de son pivotement, le bras de manoeuvre 9 s'étend globalement verticalement, c'est-à-dire que son axe longitudinal fait un angle avec la verticale compris entre 0 et 30°.

On comprend bien que la configuration particulière des bras de manoeuvre 9 et biellette 8 permet de limiter la course de l'extrémité libre du bras de manoeuvre 9 et ainsi de faciliter sa manipulation et de faire en sorte que ladite course reste dans l'encombrement du panneau vertical 4.

Pour limiter l'encombrement du dispositif de freinage 1 selon l'invention tout en garantissant sa résistance mécanique, les bras de manoeuvre 9 et biellette 8 sont réalisés à partir de plats, ces derniers étant avantageusement métalliques, les plats étant disposés de sorte que les bords longitudinaux de leur section transversale, classiquement en forme de rectangle, soient parallèles au panneau 4. Cette configuration est particulièrement intéressante car elle permet, en association avec le mode de coopération spécifique entre le bras de manoeuvre 9 et la biellette 8, d'avoir lesdits bras de manoeuvre 9 et biellette 8 positionnés au plus près dudit panneau 4 et, par conséquent, de ne pas augmenter les dimensions hors-tout du chariot 2.

Enfin, pour éviter tout risque de blessure de l'opérateur manipulant le bras de manoeuvre 9, le dispositif de freinage 1 selon l'invention comporte une plaque de protection 14 fixée contre le panneau vertical 4 à l'extérieur du chariot 2 au droit de la zone de déplacement de l'extrémité libre du bras de manoeuvre 9, ladite plaque de protection 14 évitant tout risque de coincement des doigts de l'opérateur dans les mailles du treillis du panneau vertical 4.

Le dispositif de freinage 1 selon l'invention trouve une application particulière pour les chariots en treillis pour le transport de colis.

Enfin, il va de soi que les exemples de dispositif de freinage 1 conformes à l'invention qui viennent d'être décrits ne sont que des illustrations particulières, en aucun cas limitatives de l'invention.

## Revendications

1. Dispositif de freinage (1) pour un chariot (2) roulant pour colis comprenant un plateau (3) de forme globalement carrée ou rectangulaire reposant sur une pluralité de roulettes et muni d'au moins un panneau vertical (4) en treillis disposé le long d'un (5) des bords dudit plateau (3), ledit dispositif de freinage (1) comportant au moins :
- un patin disposé sous le plateau (3) dudit chariot (2) et étant mobile entre une position "haute" dans laquelle il n'est pas en contact avec le sol et une position "basse" dans laquelle il est en appui contre le sol de sorte à pouvoir freiner et immobiliser ledit chariot (2), et inversement,
- des moyens de déplacement pour déplacer ledit patin entre sa position "haute" et sa position "basse", et inversement,
- un arbre (6) s'étendant sous le plateau (3) du chariot (2) et monté pivotant autour d'un axe de rotation (7) horizontal et perpendiculaire audit bord (5) dudit plateau (3), ledit arbre (6) coopérant avec les moyens de déplacement pour déplacer ledit patin, et
- une biellette (8) fixée à une extrémité de l'arbre (6) et à l'extérieur du chariot (2) du côté du panneau vertical (4), et s'étendant perpendiculairement à l'axe de rotation (7) dudit arbre (6), ledit dispositif de freinage (1) étant **caractérisé en ce qu'**il comporte un bras de manoeuvre (9) monté pivotant sur le panneau vertical (4) à l'extérieur du chariot (2) autour d'un axe de rotation (10) parallèle à l'axe de rotation (7) de l'arbre (6), ledit bras de manoeuvre (9) coopérant avec la biellette (8) de sorte qu'une rotation du bras de manoeuvre (9) autour de son axe de rotation (10) dans un sens entraine, grâce à ladite biellette (8), une rotation de l'arbre (6) autour de son axe de rotation (7) dans l'autre sens, et inversement.

2. Dispositif de freinage (1) selon la revendication 1 **caractérisé en ce que** la biellette (8) comporte un pion (12) s'étendant parallèlement audit axe de rotation (7) de l'arbre (6), ledit pion (12) se déplaçant à l'intérieur d'une rainure (13) aménagée sur l'une des extrémités du bras de manoeuvre (9).

3. Dispositif de freinage (1) selon la revendication 2 **caractérisé en ce que** ladite rainure (13) est de forme oblongue et traverse de part en part ledit bras de manoeuvre (9).

4. Dispositif de freinage (1) selon l'une quelconque des revendications 1 à 3 **caractérisé en ce que** les bras de manoeuvre (9) et biellette (8) sont réalisés à partir de plats métalliques.

5. Dispositif de freinage (1) selon l'une quelconque des revendications 1 à 4 **caractérisé en ce que** les moyens de déplacement comprennent au moins :
- une lame associée à un ressort de traction recevant à l'une de ses extrémités le patin et étant montée pivotante autour d'un axe horizontal par son autre extrémité sous le plateau (3) dudit chariot (2), ladite lame tendant à ramener ledit patin dans sa position "haute", et
- une came (11) disposée sous ledit plateau (3) et fixée sur l'arbre (6), ladite came (11) permettant de déplacer l'extrémité libre de la lame vers le bas en direction du sol de sorte à amener le patin jusqu'à sa position "basse" ou, au contraire, de libérer l'extrémité libre de la lame de sorte à ramener le patin jusqu'à sa position "haute" grâce à l'action dudit ressort.

6. Dispositif de freinage (1) selon l'une quelconque des revendications 1 à 5 **caractérisé en ce qu'**il comporte une plaque de protection (14) fixée contre le panneau vertical (4) à l'extérieur du chariot (2) au droit de la zone de déplacement de l'extrémité libre du bras de manoeuvre (9).

## Patentansprüche

1. Bremsvorrichtung (1) für einen Rollwagen (2) für Pakete, der eine Platte (3) mit einer allgemein quadratischen oder rechteckigen Form enthält, die auf einer Vielzahl von Rollen aufliegt und mit mindestens einer vertikalen Gitterwand (4) versehen ist, die entlang einer (5) der Kanten der Platte (3) angeordnet ist, wobei die Bremsvorrichtung (1) mindestens Folgendes umfasst:
- ein Gleitstück, das unter der Platte (3) des Wagens (2) angeordnet ist und zwischen einer "hohen" Position, in der es keinen Kontakt mit dem Boden hat, und einer "niedrigen" Position, in der es auf dem Boden aufliegt, um den Wagen (2) bremsen und blockieren zu können, und umgekehrt beweglich ist,
- Bewegungsmittel, um das Gleitstück zwischen seiner "hohen" Position und seiner "niedrigen" Position und umgekehrt zu bewegen,
- eine Welle (6), die sich unter der Platte (3) des Wagens (2) erstreckt und schwenkbar um eine Drehachse (7), die horizontal und senkrecht zur Kante (5) der Platte (3) verläuft, montiert ist, wobei die Welle (6) mit den Bewegungsmitteln zusammenwirkt, um das Gleitstück zu bewegen, und
- eine Verbindungsstange (8), die an einem Ende der Welle (6) und an der Außenseite des Wagens (2) auf der Seite der vertikalen Wand (4) befestigt ist und sich senkrecht zur Drehachse (7) der Welle (6) erstreckt, wobei die Bremsvorrichtung (1) **dadurch gekennzeichnet ist, dass** sie einen Betätigungsarm (9) umfasst, der schwenkbar um eine Drehachse (10), die parallel zur Drehachse (7) der Welle (6) verläuft, an der vertikalen Wand (4) an der Außenseite des Wagens (2) montiert ist, wobei der Betätigungsarm (9) mit der Verbindungsstange (8) zusammenwirkt, so dass eine Drehung des Betätigungsarms (9) um seine Drehachse (10) in eine Richtung mittels der Verbindungsstange (8) eine Drehung der Welle (6) um ihre Drehachse (7) in die andere Richtung und umgekehrt bewirkt.

2. Bremsvorrichtung (1) nach Anspruch 1, **dadurch gekennzeichnet, dass** die Verbindungsstange (8) einen Zapfen (12) umfasst, der sich parallel zur Drehachse (7) der Welle (6) erstreckt, wobei sich der Zapfen (12) in das Innere einer Nut (13) bewegt, die an einem der Enden des Betätigungsarms (9) vorgesehen ist.

3. Bremsvorrichtung (1) nach Anspruch 2, **dadurch gekennzeichnet, dass** die Nut (13) eine längliche Form aufweist und von einer Seite zur anderen durch den Betätigungsarm (9) verläuft.

4. Bremsvorrichtung (1) nach einem der Ansprüche 1 bis 3, **dadurch gekennzeichnet, dass** der Betätigungsarm (9) und die Verbindungsstange (8) aus Metallplatten hergestellt sind.

5. Bremsvorrichtung (1) nach einem der Ansprüche 1 bis 4, **dadurch gekennzeichnet, dass** die Bewegungsmittel mindestens Folgendes umfassen:
- ein Blatt, das einer Zugfeder zugeordnet ist, an einem seiner Enden das Gleitstück aufnimmt und mit seinem anderen Ende unter der Platte (3) des Wagens (2) schwenkbar um eine horizontale Achse montiert ist, wobei das Blatt dazu tendiert, das Gleitstück in seine "hohe" Position zurückzubringen, und
- eine Nocke (11), die unter der Platte (3) angeordnet und an der Welle (6) befestigt ist, wobei die Nocke (11) es ermöglicht, das freie Ende des Blatts nach unten in Richtung Boden zu bewegen, um das Gleitstück bis in seine "niedrige" Position zu bringen oder, im Gegenteil, das freie Ende des Gleitstücks freizugeben, um das Gleitstück mittels der Wirkung der Feder zurück in seine "hohe" Position zu bringen.

6. Bremsvorrichtung (1) nach einem der Ansprüche 1 bis 5, **dadurch gekennzeichnet, dass** sie eine Schutzplatte (14) umfasst, die an der vertikalen Wand (4) an der Außenseite des Wagens (2) im Bewegungsbereich des freien Endes des Betätigungsarms (9) befestigt ist.

## Claims

1. A braking device (1) for a rolling wagon (2) for parcels comprising a tray (3) with a generally square or rectangular shape resting on a plurality of castors and provided with at least one lattice vertical panel (4) arranged along one (5) of the edges of said tray (3), said braking device (1) including at least:
- a brake shoe arranged under the tray (3) of said wagon (2) and being movable between a "high" position in which it is not in contact with the ground and a "low" position in which it bears against the ground so as to be able to brake and immobilise said wagon (2), and vice versa,
- moving means for moving said brake shoe between its "high" position and its "low" position, and vice versa,
- a shaft (6) extending under the tray (3) of the wagon (2) and pivotably mounted about a horizontal axis of rotation (7) and perpendicular to said edge (5) of said tray (3), said shaft (6) cooperating with the moving means to move said brake shoe, and
- a connecting rod (8) fastened to one end of the shaft (6) and outside the wagon (2) on the side of the vertical panel (4), and extending perpendicularly to the axis of rotation (7) of said shaft (6),
said braking device (1) being **characterised in that** it includes a manoeuvring arm (9) pivotably mounted on the vertical panel (4) outside the wagon (2) about an axis of rotation (10) parallel to the axis of rotation (7) of the shaft (6), said manoeuvring arm (9) cooperating with the connecting rod (8) so that a rotation of the manoeuvring arm (9) about its axis of rotation (10) in one direction causes, thanks to said connecting rod (8), a rotation of the shaft (6) about its axis of rotation (7) in the other direction, and vice versa.

2. The braking device (1) according to claim 1, **characterised in that** the connecting rod (8) includes a pin (12) extending parallel to said axis of rotation (7) of the shaft (6), said pin (12) moving inside a groove (13) formed on one of the ends of the manoeuvring arm (9) .

3. The braking device (1) according to claim 2, **characterised in that** said groove (13) is oblong shaped and passes throughout said manoeuvring arm (9).

4. The braking device (1) according to any one of claims 1 to 3, **characterised in that** the manoeuvring arms (9) and the connecting rod (8) are made from flat metals.

5. The braking device (1) according to any one of claims 1 to 4, **characterised in that** the movement means comprise at least:
- a leaf associated with a tension spring receiving the brake shoe at one of its ends and being pivotably mounted about a horizontal axis by its other end under the tray (3) of said wagon (2), said leaf tending to return said brake shoe back to its "high" position, and
- a cam (11) arranged under said tray (3) and fastened on the shaft (6), said cam (11) allowing moving the free end of the leaf downwards in the direction of the ground so as to bring the brake shoe up to its "low" position or, on the contrary, release the free end of the leaf so as to return the brake shoe back up to its "high" position thanks to the action of said spring.

6. The braking device (1) according to any one of claims 1 to 5, **characterised in that** it includes a protective plate (14) fastened against the vertical panel (4) outside the wagon (2) in line with the movement area of the free end of the manoeuvring arm (9).
